# EUROPÄISCHE PATENTSCHRIFT

(11) **EP 0 900 763 B1**
(45) Veröffentlichungstag und Bekanntmachung des Hinweises auf die Patenterteilung: **11.10.2000**
(21) Anmeldenummer: 98115649.0
(22) Anmeldetag: 20.08.1998
(51) Int. Cl.: C01G 19/08, B01J 8/20

(54) **Verfahren zur Herstellung von Zinntetrachlorid**
Process for the preparation of tin tetrachloride
Procédé de préparation du tétrachlorure d'étain

(30) Priorität: 06.09.1997 DE 19739155
(43) Veröffentlichungstag der Anmeldung: 10.03.1999
(73) Patentinhaber: Vinnolit Monomer GmbH & Co. KG, 85737 Ismaning (DE)
(72) Erfinder: Benninger, Siegfried, Dr., 84508 Burgkirchen (DE)
(74) Vertreter: Schuderer, Michael, Dr.

(56) Entgegenhaltungen:
- WO-A-91/03425
- US-A- 1 897 360

## Beschreibung

Verfahren zur Herstellung von Zinntetrachlorid aus den Elementen Zinn und Chlor sind seit langem bekannt, beispielsweise aus EP-B-0 057 929, EP-B-0 094 003 und der darin genannten Literatur. Bei diesen Verfahren wird Zinntetrachlorid im Kreislauf geführt und Chlor in den Reaktionsraum unten eingeleitet. Das im Zinntetrachlorid gelöste Chlor tritt dann mit dem metallischen Zinn in Reaktion.

Diese Verfahren haben sich in der Praxis gut bewährt. Es hat sich jedoch gezeigt, daß bei hohen spezifischen Umsätzen und/oder im Anfahrbetrieb die Reaktion nicht hinreichend sicher geführt werden kann. Es können Störungen durch lokale Überhitzung eintreten, die zum Verschmelzen des Zinngranulats führen. Damit ist die erforderliche gleichmäßige Durchströmung des Zinngranulats gestört. In der Folge kann es zu einem unvollständigen Chlorabbau im Reaktor kommen, das heißt zu einem Produkt mit erhöhtem Chlorgehalt. Die Produktionskapazität kann dadurch mehr oder minder stark eingeschränkt werden. Im ungünstigsten Falle kann es zum Totalausfall der Anlage und durch Schädigung des Reaktors zum Austritt von Chlor und Zinntetrachlorid kommen.

Aus der EP-B2-0 441 931 ist ein Verfahren zur kontinuierlichen Herstellung von Zinntetrachlorid durch Umsetzung von überschüssigem, metallischem Zinn mit Chlor in einem Reaktionsraum in Gegenwart von flüssigem Zinntetrachlorid bekannt, wobei in einem Kreislauf dem Reaktionsraum Zinntetrachlorid entnommen und gegebenenfalls nach Kühlung wieder zugeführt und soviel Zinntetrachlorid aus dem Kreislauf abgeführt wird, daß die Standhöhe des Zinntetrachlorids im Reaktionsraum gleichbleibt, das dadurch gekennzeichnet ist, daß das Chlor außerhalb des gesamten im Kreislauf befindlichen Reaktionsraums in den im Kreis geführten Strom von Zinntetrachlorid in einer solche Menge eingeleitet wird, daß es vollständig im Zinntetrachlorid gelöst wird. Die gute Löslichkeit von Chlor im Zinntetrachlorid könne hierbei mit Vorteil dazu genutzt werden, um einen günstigen Reaktionsverlauf herbeizuführen und die Reaktionsbedingungen bequem einstellen zu können. Bei der Verwendung von flüssigem Chlor könne zweckmäßigerweise die benötigte Verdampfungswärme der Reaktionswärme entnommen werden, die in dem aus dem Reaktor austretenden flüssigen Zinntetrachlorid enthalten ist.

Weiterhin wird eine geringe Temperaturdifferenz zwischen dem Eintritt des Zinntetrachlorids in den Reaktionsraum (70 bis 80 °C) und dem Ausgang der Reaktionszone (91 °C beziehungsweise 10 °C Differenz zwischen Ein- und Ausgang der Hauptreaktionszone der Zinnschüttung) angegeben. Dieses bekannte Verfahren ergibt jedoch relativ niedrige Raum-Zeit-Ausbeuten.

Die eingangs genannten Schwierigkeiten können je nach Raum-Zeit-Ausbeute im oberen Grenzbereich jedoch immer auftreten. Es entspricht zwar der Lehre der Verfahrenstechnik, eine Reaktorüberhitzung durch Temperaturüberwachung und automatische Chlorabschaltung zu begegnen, dennoch wird durch lokale Überhitzung der Reaktionszone die Anlagenkapazität oder -verfügbarkeit stets gefährdet oder eingeschränkt. Ein kritischer sicherheitstechnischer Punkt ist auch der Ausfall des Zinntetrachlorid-Förderstroms, der auch zur Abfuhr der Reaktionswärme notwendig ist. In diesem Falle ist die automatische Abschaltung der Chlordosierung nach der Lehre der Verfahrenstechnik eine unbedingte sicherheitstechnische Notwendigkeit, um einen unkontrollierten Reaktionsverlauf durch Chlorüberdosierung mit der Gefahr der Anlagenzerstörung auszuschließen. Dennoch bleibt die Wiederinbetriebnahme der Anlage ein kritischer Schritt, der sehr leicht unkontrolliert verlaufen kann. Das Gefährdungsmoment ist bedingt durch die Störung des Zinnbettes in der Reaktionszone bei plötzlichem Druckabfall, wie er bei einem Ausfall der Zinntetrachlorid Kreislaufpumpe gegeben ist.

Der durch die Umsetzung des Zinngranulates in der Reaktionszone gebildete feine bis feinste Zinnschlamm mit einer stark vergrößerten Zinnoberfläche kann mit Chlorüberschuß unter Entstehung kritischer Temperaturspitzen reagieren. Hierbei ist die starke Temperaturabhängigkeit der Löslichkeit von Chlor in Zinntetrachlorid von Bedeutung; der unter Anfahrbedingungen normalerweise niedrigen Temperatur des Zinntetrachlorid-Kreislaufs entspricht eine gegenüber der üblichen Reaktionstemperatur vielfach erhöhte Chlorlöslichkeit. So lösen sich beispielsweise in 1 l Zinntetrachlorid bei 20 °C 125,5 g Chlor und bei 30 °C noch 96 g Chlor, jeweils bei 1 bar Chlordruck.

Es wurde nun gefunden, daß die Reaktion mit hoher Sicherheit geführt werden kann, wenn dafür gesorgt wird, daß das Zinntetrachlorid im Reaktor ein möglichst flaches und symmetrisches Strömungsprofil, bezogen auf den Reaktorquerschnitt, erhält. Dadurch ist auch die Chlorkonzentration entsprechend gleichmäßig auf den Reaktorquerschnitt verteilt, wodurch die Gefahr unerwünschter "hot-spots" vermieden wird.

Gegenstand der Erfindung ist ein Verfahren zur Herstellung von Zinntetrachlorid aus Zinngranulat und Chlor in im Kreislauf geführten Zinntetrachlorid als Reaktionsmedium, dadurch gekennzeichnet, daß das Chlorgas unmittelbar in der Mischzone am Reaktoreingang, bevor es in Kontakt mit dem Zinn kommt, eingebracht wird, und durch den Einsatz eines statischen Mischelements in eine hochdisperse Verteilung von Chlor-Gasblasen im umlaufenden Zinntetrachlorid gebracht wird und das Chlor-/Zinntetrachlorid-Medium dadurch ein gleichmäßiges Strömungsprofil ausbildet. Ein weiterer Gegenstand der Erfindung ist Vorrichtung zur Umsetzung von Chlor mit Zinngranulat in im Kreislauf geführtem Zinntetrachlorid, umfassend einen Reaktor (1), eine Mischzone (2), eine Abgrenzung (3), eine Chlorzuführung (4), eine Zinnzuführung (5), einen Überlauf (6), eine Pumpe (8), einen Wärmetauscher (9), eine Überlaufleitung (10) und eine Kreislaufleitung (11), dadurch gekennzeichnet, daß die Chlorzuführung (4) unmittelbar von unten in die Mischzone (2) des Reaktors (1) gerichtet ist und die Mischzone mit einem statischen Mischelement, zur Ausbildung eines gleichmäßigen Strömungsprofils und einer hochdispersen Veteilung von Chlorgas im umlaufenden Zinntetrachlorid, ausgerüstet ist.

Der Reaktor (1) ist dabei vorzugsweise mit einer Kühlzone, zweckmäßig mit einer Mantelkühlung ausgerüstet. Die Pumpe (8) ist vorzugsweise mit einer Pumpvorlage (7) ausgerüstet.

Im folgenden werden bevorzugte Ausgestaltungen der Erfindung näher erläutert.

Die Temperatur in der Mischzone, in der die hochdisperse Verteilung erzeugt wird, beträgt etwa 20 bis etwa 60 °C, insbesondere etwa 30 bis etwa 50 °C. In der Reaktionszone, in der das Chlor mit dem Zinn reagiert, beträgt sie etwa 70 bis etwa 130 °C, vorzugsweise etwa 70 bis etwa 120 °C, unter Ausbildung eines sehr steilen Temperaturprofils. Die Temperatur im Auslauf beträgt - bei Anwendung einer Kühlstrecke am Reaktor - etwa 80 bis 105 °C.

Das erfindungsgemäße Verfahren kann - in Abhängigkeit von der Reaktorkonstruktion - bei relativ hohen Temperaturen in der Reaktionszone von etwa 70 bis etwa 130 °C bei Atmosphärendruck sicher geführt werden, was eine erhebliche Steigerung des spezifischen Chlordurchsatzes und somit der Raum-Zeit-Ausbeute ermöglicht. Arbeitet man mit Überdruck bis etwa 2 bar, gemessen am Auslauf, so kann bei Temperaturen bis etwa 155 °C gearbeitet werden. Die genannten Temperaturobergrenzen sind durch praktische Gesichtspunkte (Druck, Wärmeabfuhr, Temperatursprung im Reaktor) gegeben. Im allgemeinen wird man im Hinblick auf eine einfachere Reaktorkonstruktion bei kontinuierlichem Betrieb Atmosphärendruck bevorzugen. Durch die relativ hohe Dichte des Reaktionsmediums (von 2,23 g/cm³ bei Raumtemperatur) kann der Arbeitsbereich allein durch die Anordnung des Reaktorüberlaufs entsprechend wirksam erhöht werden (5 m Flüssigkeitssäule entsprechen 1,11 bar Überdruck, was einer Siedepunktserhöhung auf über 142 °C entspricht).

Bei dieser Verfahrensweise und entsprechend bei Überdruckbetrieb der Reaktoren wird der Chloreingang mit einer Rückströmsicherung ausgestattet, um ein Eindringen von Zinntetrachlorid oder Zinnschlamm im Störungsfalle auszuschließen.

Alle Temperaturbereiche beziehen sich auf den stationären Zustand. Beim Anfahren der Reaktion, wenn die Reaktionszone noch nicht den gewünschten Temperaturbereich erreicht hat, ist deshalb das Chlor entsprechend langsam einzuleiten und/oder das Zinntetrachlorid auf etwa 60 bis 70 °C vorzuwärmen.

Es war überraschend festzustellen, daß eine Chlordosierung unmittelbar in die Mischzone am Reaktoreingang gegenüber der aus der EP-B2-0 441 931 bekannten Chlorzugabe außerhalb des Reaktors äußerst vorteilhaft ist. Während bei dem erfindungsgemäßen Verfahren die Temperatur am Reaktoreingang möglichst niedrig, zweckmäßig bei etwa 30 bis 50 °C gehalten wird, wird - wie eingangs ausgeführt - bei dem bekannten Verfahren als günstige Temperatur am Eingang des Zinntetrachlorids in den Reaktionsraum 70 bis 80 °C genannt. Dieses Verfahren führt so bei gleicher Strömungsrate des Zinntetrachlorids im Kreislauf zu einer wesentlich längeren Reaktionszone. Das äußert sich gegenüber der erfindungsgemäßen Verfahrensweise in einem wesentlich flacheren Temperaturprofil, das heißt deutlich geringeren und langsameren Temperaturanstieg über die Reaktorhöhe bei sonst gleichen Bedingungen. Erniedrigt man die Eintrittstemperatur von Zinntetrachlorid, so erhält man einen unvollständigen Chlorumsatz, das heißt, die Reaktionsgeschwindigkeit - und damit die Raum-Zeit-Ausbeute - ist bei dem bekannten Verfahren relativ eng begrenzt.

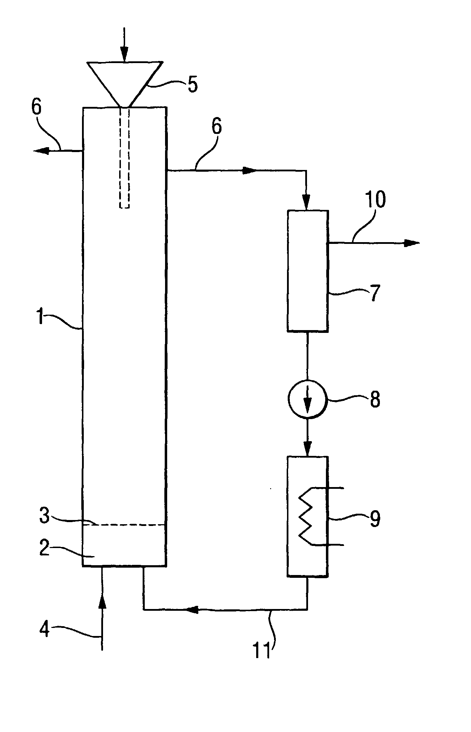

Ein Vorteil der erfindungsgemäßen Chloreinleitung, nämlich unmittelbar in der Mischzone des Reaktoreingangs, ist eine sehr kurze Reaktionszone von nur wenigen Zentimeter Schichthöhe. Damit verbunden ist ein entsprechend hoher Temperatursprung auf die gewünschte Arbeitstemperatur von etwa 70 bis etwa 130 °C in der Reaktionszone. Es ist zu betonen, daß trotz des Siedepunktes von 114 °C bei Atmosphärendruck der Siedepunkt im Reaktor auch bei 130 °C Arbeitstemperatur noch nicht erreicht wird. Die Erfindung nutzt hier sowohl den hydrostatischen Druck der Zinntetrachlorid-Säule im Reaktor als auch eine Kühlstrecke des Reaktors bis zum Überlauf. Der genannte Temperaturwert von 130 °C ist daher als praktische Temperaturobergrenze für eine wirksame Reaktorhöhe (Abstand zwischen der Zinnauflage, in der Figur die Abgrenzung 3, und dem Überlauf, in der Figur mit der Bezeichnung 6) zu sehen, die bei drucklosem Reaktorbetrieb entsprechend beeinflußt werden kann.

Die vergleichsweise kurze Reaktionszone hat den großen Vorteil, daß das Restchlor bereits in geringer Höhe über der Reaktionszone vollständig abgebaut ist. So genügt am genannten Beispiel einer wirksamen Reaktorhöhe von 5 m eine Zinnschüttung, die einer Kontaktzeit von etwa 45 bis 90 Sekunden entspricht; bei einer Strömungsgeschwindigkeit von Zinntetrachlorid von etwa 1 bis 3 m/min - ohne Zinnfüllung gerechnet - entspricht dies beispielsweise einer bevorzugten Zinngranulatschüttung von etwa 1,5 bis 3 m Höhe.

Durch die erfindungsgemäße Art der Chloreinleitung ist somit überraschenderweise eine auch bei Großanlagen sicher und leicht beherrschbare Reaktionsführung bei gegenüber dem Stand der Technik erhöhten Raum-Zeit-Ausbeuten möglich, wobei ein völlig chlorfreies Produkt erzielt wird.

Die Mischzone 2, in der das Chlor in eine hochdisperse Verteilung gebracht wird und in der das Strömungsprofil des umlaufenden Zinntetrachlorids vergleichmäßigt wird, stellt ein übliches Mischorgan dar, das diese Anforderungen - hochdisperse Verteilung eines Gases in einem flüssigen Medium - erfüllt. Es wurde gefunden, daß an sich übliche und in der Verfahrenstechnik bekannte statische Mischer die Sicherheit und Beherrschbarkeit des Prozesses entscheidend verbessern. Vor allem ermöglicht diese Reaktorkonstruktion völlig überraschend eine deutliche Erhöhung der Raum-Zeit-Ausbeuten im Vergleich zu dem bekannten Verfahren.

In einer Ausgestaltung der Erfindung wird der Reaktoreingang, also der Raum unterhalb des eigentlichen Reaktionsraums (der durch die Anwesenheit des Zinns definiert ist), mit Füllkörpern gefüllt. Zweckmäßig verjüngt sich dieser Teil des Reaktors trichterförmig nach unten. Das gasförmig zugeführte Chlor wird dann in diesen Eingangsraum eingeleitet, beispielsweise nach Art einer Venturi-Düse.

In einer weiteren Ausgestaltung der Erfindung ist der Raum zwischen dem Auflagegitter als Begrenzung des Zinngranulates und der Chloreinleitstelle als Statikmischorgan ausgeführt. Zweck der Vorrichtung ist eine hochdisperse Verteilung von Chlorgas in kurzer Zeit. Die Wahl eines statischen Mischorgans ist eine Frage der wirtschaftlichen und technischen Zweckmäßigkeit, um die hochdisperse Chlorgas-Verteilung zu erzielen. Diese kann selbstverständlich auch durch Eintrag kinetischer Energie, zum Beispiel mit einem Turborührer, erreicht werden. Wesentlich ist, daß diese hochdisperse Verteilung unmittelbar vor Eintritt der Chlor-Zinntetrachlorid-Phase in die Zinngranulat-Zone vorliegt. Unabhängig davon besteht die Forderung, daß das Strömungsprofil bestmöglich über den Reaktorquerschnitt zu vergleichmäßigen ist.

Durch die erfindungsgemäße Ausgestaltung des Reaktors werden die eingangs genannten Schwierigkeiten beim Anfahren der Reaktion sowie nach Unterbrechungen weitestgehend vermieden. Die erfindungsgemäße Reaktorkonstruktion und Prozeßführung ermöglichen auch gegenüber bisher bekannten Reaktoren ein schnelleres und sicheres Anfahren der Reaktion, da die Temperaturführung gut beherrschbar ist.

Hinsichtlich der übrigen Reaktionsbedingungen kann auf den genannten Stand der Technik verwiesen werden.

Die Erfindung wird durch die folgenden Beispiele noch näher erläutert.

### Beispiel 1

Eingesetzt wird ein Reaktor aus Edelstahl, innerer Durchmesser 400 mm, mit Mantelkühlung. Die Zinnschüttung ruht auf einer Lochplatte mit 10 mm Bohrungen und einigen darüber liegenden Edelstahlsieben mit 2 mm Maschenweite. Der Zinntetrachlorid-Überlauf zu einer Pumpvorlage ist in 5,5 m Höhe über der Lochplatte angeordnet. Unter der Lochplatte ist ein Statikmischer mit Chlor- und Zinntetrachlorid-Eingängen angeordnet, der eine hochdisperse Verteilung des Chlors im Zinntetrachlorid und - vor dem Eintritt in die Zinnschüttung - ein gleichmäßiges Strömungsprofil ergibt. In die Kreislaufleitung für das Zinntetrachlorid ist ein Röhren-Wärmetauscher eingebaut.

Dieser Reaktor wird mit einem Granulat von 3 bis 6 mm Korngröße aus 99,95%igem Zinn beschickt. Die Füllhöhe beträgt 2,0 m, die durch kontinuierliche und automatische Nachdosierung aufrechterhalten wird. Pro Stunde werden 115 Nm³/h Chlor bei einer Zinntetrachlorid-Temperatur von 19 °C am Reaktoreingang eindosiert; Zinntetrachlorid wird mit einer Förderleistung von 13,5 m³/h im Kreislauf umgepumpt. Der Reaktor wird bei Atmosphärendruck betrieben. Nach Einstellung des stationären Zustands wird in 10 cm Höhe über der Lochplatte eine Temperatur von 94 °C und in 100 cm Höhe über der Lochplatte 89 °C gemessen. Der Überlauf hat eine Temperatur von 80 °C. Die Chlorkonzentration betrug < 1 ppm.

Der Umsatz, bezogen auf das Chlor, ist stöchiometrisch. Nach 24 Stunden wurde eine Zinntetrachloridmenge von 16,35 t erhalten. Die Raum-Zeit-Ausbeute an Zinntetrachlorid beträgt 2,71 kg/dm³ Zinngranulat · h.

### Beispiel 2

Beispiel 1 wird mit den folgenden Änderungen wiederholt:

Die Temperatur am Reaktoreingang beträgt 33 °C, eindosiert werden 80 Nm³/h Chlor. Die Kreislaufförderung beträgt 12 m³ Zinntetrachlorid/h.

Gemessen werden folgende Temperaturen:

| | |
|---|---|
| in 10 cm Höhe | 89 °C |
| in 100 cm Höhe | 85 °C |
| Überlauf | 76 °C |

Nach 30 Stunden werden 14,2 t Zinntetrachlorid mit einer Chlorkonzentration von < 1 ppm gefunden.

Die Raum-Zeit-Ausbeute ergibt sich zu 1,89 kg/dm³ · h.

## Patentansprüche

1. Verfahren zur Herstellung von Zinntetrachlorid aus Zinngranulat und Chlor in im Kreislauf geführten Zinntetrachlorid als Reaktionsmedium, dadurch gekennzeichnet, daß das Chlorgas unmittelbar in der Mischzone am Reaktoreingang, bevor es in Kontakt mit dem Zinn kommt, eingebracht wird, und durch den Einsatz eines statischen Mischelements in eine hochdisperse Verteilung von Chlor-Gasblasen im umlaufenden Zinntetrachlorid gebracht wird und das Chlor-/Zinntetrachlorid-Medium dadurch ein gleichmäßiges Strömungsprofil ausbildet.

2. Verfahren nach Anspruch 1, dadurch gekennzeichnet, daß die Temperatur in der Mischzone, in der die hochdisperse Verteilung erzeugt wird, 20 bis 60 °C und in der Reaktionszone, in der das Chlor mit dem Zinn in Kontakt ist, 70 bis 130 °C beträgt.

3. Vorrichtung zur Umsetzung von Chlor mit Zinngranulat in im Kreislauf geführtem Zinntetrachlorid, umfassend einen Reaktor (1), eine Mischzone (2), eine Abgrenzung (3), eine Chlorzuführung (4), eine Zinnzuführung (5), einen Überlauf (6), eine Pumpe (8), einen Wärmetauscher (9), eine Überlaufleitung (10) und eine Kreislaufleitung (11), dadurch gekennzeichnet, daß die Chlorzuführung (4) unmittelbar von unten in die Mischzone (2) des Reaktors (1) gerichtet ist und die Mischzone mit einem statischen Mischelement, zur Ausbildung eines gleichmäßigen Strömungsprofils und einer hochdispersen Veteilung von Chlorgas im umlaufenden Zinntetrachlorid, ausgerüstet ist.

4. Vorrichtung nach Anspruch 3, dadurch gekennzeichnet, daß der Reaktor (1) mit einer Kühlzone ausgerüstet ist.

5. Vorrichtung nach Anspruch 3 bis 4, dadurch gekennzeichnet, daß die Pumpe (8) mit einer vorgeschalteten Pumpvorlage (7) ausgerüstet ist.

## Claims

1. Process for preparing tin tetrachloride from tin granules and chlorine in circulated tin tetrachloride as reaction medium, characterized in that the chlorine gas is introduced directly in the mixing zone at the reactor entry, before it comes into contact with the tin, and by the use of a static mixing element is brought into a highly disperse distribution of chlorine gas bubbles in the circulating tin tetrachloride and the chlorine/tin tetrachloride medium thereby develops a uniform flow profile.

2. Process according to Claim 1, characterized in that the temperature in the mixing zone in which the highly disperse distribution is produced is from 20 to about 60°C and in the reaction zone in which the chlorine is in contact with the tin is from 70 to 130°C.

3. Apparatus for reacting chlorine with tin granules in circulated tin tetrachloride, comprising a reactor (1), a mixing zone (2), a partition (3), a chlorine supply (4), a tin supply (5), an overflow (6), a pump (8), a heat exchanger (9), an overflow line (10) and a circulation line (11), characterized in that the chlorine supply (4) is directed straight from below into the mixing zone (2) of the reactor (1) and the mixing zone is equipped with a static mixing element for the purpose of developing a uniform flow profile and a highly disperse distribution of chlorine gas in the circulating tin tetrachloride.

4. Apparatus according to Claim 3, characterized in that the reactor (1) is equipped with a cooling zone.

5. Apparatus according to Claim 3 to 4, characterized in that the pump (8) is equipped with an upstream pump reservoir (7).

## Revendications

1. Procédé de préparation de tétrachlorure d'étain à partir de granulés d'étain et de chlore dans du tétrachlorure d'étain mis en circulation en tant que milieu réactionnel, caractérisé en ce que le chlore gazeux est introduit immédiatement dans la zone de mélange à l'entrée du réacteur, avant d'entrer en contact avec l'étain, et est amené, grâce à l'utilisation d'un élément de mélange statique, sous la forme d'une répartition hautement dispersée de bulles de chlore gazeux dans le tétrachlorure d'étain en circulation, et le milieu chlore / tétrachlorure d'étain constitue de ce fait un profil d'écoulement uniforme.

2. Procédé selon la revendication 1, caractérisé en ce que la température dans la zone de mélange, dans laquelle la répartition hautement dispersée est produite, est de 20 à 60°C et en ce que la température dans la zone de réaction, dans laquelle le chlore est en contact avec l'étain, est de 70 à 130°C.

3. Dispositif destiné à la réaction du chlore avec les granulés d'étain dans le tétrachlorure d'étain conduit en circuit fermé, comprenant un réacteur (1), une zone de mélange (2), une séparation (3), une alimentation en chlore (4), une alimentation en étain (5), un trop-plein (6), une pompe (8), un échangeur thermique (9), une conduite de trop-plein (10) et une conduite de mise en circulation (11), caractérisé en ce que l'alimentation en chlore (4) est dirigée immédiatement d'en dessous jusque dans la zone de mélange (2) du réacteur (1) et la zone de mélange est équipée d'un élément de mélange statique, en vue de la formation d'un profil d'écoulement uniforme et d'une répartition hautement dispersée de chlore gazeux dans le tétrachlorure d'étain en circulation.

4. Dispositif selon la revendication 3, caractérisé en ce que le réacteur (1) est équipé d'une zone de refroidissement.

5. Dispositif selon la revendication 3 à 4, caractérisé en ce que la pompe (8) est équipée d'un réservoir de pompe en amont (7).
